# EUROPEAN PATENT APPLICATION

(11) **EP 4 632 278 A1**
(43) Date of publication of application: **15.10.2025**
(21) Application number: 24870266.4
(22) Date of filing: 23.08.2024
(51) Int. Cl.: F24C 15/20

(54) **RANGE HOOD CONTROL METHOD, APPARATUS, AND DEVICE, AND STORAGE MEDIUM**

(30) Priority: 27.09.2023 CN 202311271097
(71) Applicant: Qingdao Haier Intelligent Cooking Appliances Co., Ltd, Qingdao, Shandong 266101 (CN); Haier Smart Home Co., Ltd, Qingdao, Shandong 266101 (CN)
(72) Inventor: WU, Yong, Qingdao, Shandong 266101 (CN); LIU, Xi, Qingdao, Shandong 266101 (CN); MENG, Yongzhe, Qingdao, Shandong 266101 (CN); WANG, Yan, Qingdao, Shandong 266101 (CN)
(74) Representative: Barker Brettell LLP
(86) International application number: PCT/CN2024/114376
(87) International publication number: WO 2025/066720

(57) **Abstract**

The application belong to the technical field of electrical appliances, and specifically relates to a range hood control method, apparatus, and device, and a storage medium, the present application is applied to a range hood with a liftable fume collecting cavity includes: detecting a fan speed of the range hood; and if the fan speed is greater than a fan speed threshold corresponding to a current exhaust air volume of the range hood, reducing an exhaust air volume of the range hood and controlling the fume collecting cavity of the range hood to descend. In the present application, when a fan speed of the range hood is relatively high, by reducing the exhaust air volume of the range hood, the speed of the range hood can be reduced, by descending the fume collecting cavity, the negative pressure area at the air inlet of the fume collecting cavity is decreased, the effect of oil fume extraction is improved, and the reduction of the oil fume extraction capability caused by the reduction of the exhaust air volume is mitigated.

## Description

This application claims priority to Chinese Patent Application No. 202311271097.5, filed to China National Intellectual Property Administration on September 27, 2023 and entitled "RANGE HOOD CONTROL METHOD, APPARATUS, AND DEVICE, AND STORAGE MEDIUM", which is hereby incorporated by reference in its entirety.

### TECHNICAL FIELD

The present application relates to the field of electrical appliances and, in particular, to a range hood control method, apparatus, and device, and a storage medium.

### BACKGROUND

A range hood is an essential electrical appliance in the kitchen, its working principle is that through the high-speed rotation of a fan, make a negative pressure appear at the inlet of the fume collecting cavity, so as to extract the oil fume from a fume collecting cavity.

Because of a high fan speed, the noise of a range hood is relatively high during operation, and the fan speed may be high due to different working conditions under the condition of a certain exhaust air volume of the range hood, which further aggravates the noise of the range hood.

The noise of a range hood seriously affects the user usage experience, so it is necessary to solve the problem of high noise when a fan speed of an existing range hood is high, so as to improve the user usage experience.

### SUMMARY

Embodiments of the present application provides a range hood control method, apparatus, and device, and a storage medium, which are used for solving the problem of high noise when a fan speed of a range hood is high in prior art.

In a first aspect, an embodiment of the present application provides a range hood control method, applied to a range hood with a liftable fume collecting cavity, and the method includes:
detecting a fan speed of the range hood; and
if the fan speed is greater than a fan speed threshold corresponding to a current exhaust air volume of the range hood, reducing an exhaust air volume of the range hood and controlling the fume collecting cavity of the range hood to descend.

In a preferred technical solution for aforementioned range hood control method, the reducing the exhaust air volume of the range hood includes:
obtaining a current air volume level of the range hood;
determining a target air volume level according to the current air volume level; and
adjusting the exhaust air volume of the range hood to an exhaust air volume corresponding to the target air volume level.

In a preferred technical solution of aforementioned range hood control method, the determining the target air volume level according to the current air volume level includes:
determining an air volume level that is one level lower than the current air volume level as the target air volume level.

In a preferred technical solution of aforementioned range hood control method, the controlling the fume collecting cavity of the range hood to descend includes:
determining a target descending height of the fume collecting cavity according to the current air volume level and the target air volume level; and
controlling the fume collecting cavity to descend the target descending height.

In a preferred technical solution of aforementioned range hood control method, before the detecting the fan speed of the range hood, the method further includes:
detecting an oil fume concentration at the range hood; and
adjusting a descending height of the fume collecting cavity according to the oil fume concentration.

In a preferred technical solution of aforementioned range hood control method, the adjusting the descending height of the fume collecting cavity according to the oil fume concentration includes:
according to the higher an upper concentration limit value of a concentration range in which the oil fume concentration is located, the greater the descending height of the fume collecting cavity.

In a preferred technical solution of aforementioned range hood control method, a fume collecting plate is arrange at an air inlet of the fume collecting cavity, and the method further includes:
adjusting an opening angle of the fume collecting plate according to the descending height of the fume collecting cavity, and the greater the descending height of the fume collecting cavity, the smaller the opening angle of the fume collecting plate.

In a second aspect, an embodiment of the present application provides a range hood control apparatus, and the apparatus includes:
a detection module, configured to detect a fan speed of the range hood; and
a control module, configured to:
   obtain the fan speed of the range hood from the detection module, if the fan speed is greater than a fan speed threshold corresponding to a current exhaust air volume of the range hood, reduce an exhaust air volume of the range hood and control the fume collecting cavity of the range hood to descend.

In a third aspect, an embodiment of the present application provides a range hood control device, and the device includes:
a memory and a processor;
the memory is configured to store a computer program;
the processor is configured to execute the computer program stored in the memory to implement the above range hood control method.

In a fourth aspect, an embodiment of the present application provides computer readable storage medium, the computer readable storage medium storing a computer program; the computer programs is used for implementing the above range hood control method.

In a fifth aspect, an embodiment of the present application provides a computer program product, including a computer program, the computer program executed by a processor to implement the steps of any one of the above range hood control method.

An embodiment of the present application provides a range hood control method, apparatus, and device, and a storage medium, when a fan speed of the range hood is relatively high, by reducing the exhaust air volume of the range hood, the speed of the range hood can be reduced, by descending the fume collecting cavity, the negative pressure area at the air inlet of the fume collecting cavity is decreased, the effect of oil fume extraction is improved, and the reduction of the oil fume extraction capability caused by the reduction of the exhaust air volume is mitigated.

### BRIEF DESCRIPTION OF DRAWINGS

FIG. 1 is a schematic flowchart of a range hood control method provided by an embodiment of the present application.
FIG. 2 is a schematic flowchart of a method for reducing the exhaust air volume of a range hood provided by an embodiment of the present application.
FIG. 3 is a schematic flowchart of a method for controlling the descent of a fume collecting cavity of a range hood provided by an embodiment of the present application.
FIG. 4 is a schematic flowchart of another range hood control method provided by an embodiment of the present application.
FIG. 5 is a schematic diagram of a range hood control apparatus provided by an embodiment of the present application.
FIG. 6 is a schematic diagram of a range hood control device provided by an embodiment of the present application.

### DESCRIPTION OF EMBODIMENTS

Exemplary embodiments will be described here in detail, with examples shown in the drawings. When the following description refers to the drawings, unless otherwise indicated, the same numbers in different drawings indicate the same or similar elements. The embodiments described in the following exemplary embodiments do not represent all embodiments consistent with the present application. Rather, they are merely examples of apparatuses and methods consistent with some aspects of the present application as detailed in the appended claims.

It should also be noted that the terms "including", "containing" or any other variation thereof are intended to cover non-exclusive inclusion, so that a commodity or system including a series of elements includes not only those elements, but also other elements not explicitly listed, or elements inherent to such commodity or system. Without more restrictions, an element defined by the phrase "including one" does not exclude the existence of other identical elements in the commodity or system that includes the element.

In the related art, a range hood is provided with a fume collecting cavity, and the air inlet of the fume collecting cavity faces the cooking stove, when the fan in the range hood rotates at a high speed, through extraction of external air by the fume collecting cavity, make a negative pressure appear at the inlet of the fume collecting cavity, so as to extract the oil fume from a fume collecting cavity.

Because of a high fan speed, the noise of a range hood is relatively high during operation, and the fan speed may be high due to different working conditions under the condition of a certain exhaust air volume of the range hood, which further aggravates the noise of the range hood.

In order to solve the problem of high noise when the fan speed of a range hood is high in the related art, the technical concept of the present application is to detect a fan speed of the range hood, when the fan speed is greater than a fan speed threshold corresponding to a current exhaust air volume of the range hood, reduce an exhaust air volume of the range hood and control the fume collecting cavity of the range hood to descend.

The technical scheme of the present application and how to solve the above technical problems by the technical scheme of the present application will be described in detail with specific examples. The following specific embodiments can be combined with each other, and the same or similar concepts or processes may not be repeated in some embodiments. Embodiments of the present application will be described below with reference to the drawings.

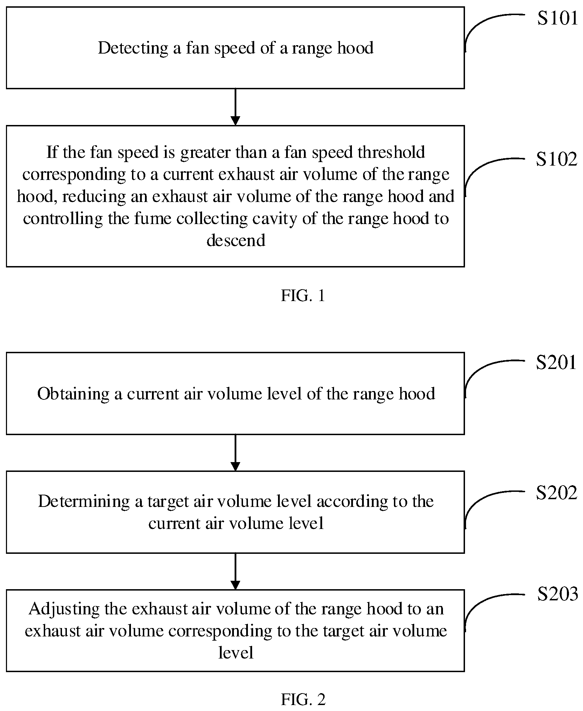

In a possible embodiment of the present application, a range hood control method is provided, the method is applied to a control unit of a range hood with a liftable fume collecting cavity. FIG. 1 is a schematic flowchart of a range hood control method provided by an embodiment of the present application, as shown in FIG. 1, the method includes the following steps.

S101, detecting a fan speed of a range hood.

Specifically, a rotation speed sensor can be installed at the fan of the range hood, and the control unit controls the rotation speed sensor to detect the fan speed.

S102, if the fan speed is greater than a fan speed threshold corresponding to a current exhaust air volume of the range hood, reducing an exhaust air volume of the range hood and controlling the fume collecting cavity of the range hood to descend.

It should be noted that in the present application, the fume collecting cavity of the range hood can be controlled by the control unit to ascend and descend, which is realized by installing a lifting motor inside the range hood, and the control unit controls the operation of the lifting motor, so that the lifting motor drives the fume collecting cavity to ascend and descend.

Due to different working conditions, the same exhaust air volume of the range hood may correspond to different fan speeds, if the current fan speed exceeds the fan speed threshold corresponding to the current exhaust air volume, it means that the fan speed is high. For example, when the exhaust air volume is 10m³/min, the corresponding fan speed threshold is 1400r/min, and when the exhaust air volume is 8m³/min, the corresponding fan speed threshold is 1200r/min.

The fan speed thresholds corresponding to different exhaust air volumes can be pre-stored in the storage module of the control unit of the range hood, when detecting that the fan speed is greater than the fan speed threshold corresponding to the current exhaust air volume of the range hood, the control unit controls the range hood to reduce the exhaust air volume, and the fan speed will inevitably decrease when the exhaust air volume of the range hood decreases, so that the reduction of the fan noise can be realized.

After reducing exhaust air volume, as the oil fume extraction capability of the range hood also decreases, in order to avoid affecting the oil fume extraction capability of the range hood, the control unit controls the fume collecting cavity to descend, so that the negative pressure area at the air inlet of the fume collecting cavity is closer to the oil fume at the cooking stove, thereby improving the oil fume extraction capability of the range hood.

The technical effect of this embodiment lies in: when a fan speed of a range hood is relatively high, by reducing the exhaust air volume of the range hood, the speed of the range hood can be reduced, and at the same time, by descending the fume collecting cavity, the fan noise of the range hood is decreased without affecting the oil fume extraction capability of the range hood.

In a possible embodiment of the present application, a method for reducing the exhaust air volume of a range hood is provided, FIG. 2 is a schematic flowchart of a method for reducing the exhaust air volume of a range hood provided by an embodiment of the present application, as shown in FIG. 2, the method includes the following steps.

S201, obtaining a current air volume level of the range hood.

S202, determining a target air volume level according to the current air volume level.

Optionally, the determining the target air volume level according to the current air volume level includes:
determining an air volume level that is one level lower than the current air volume level as the target air volume level.

In this step, the target air volume level is one level lower than the current air volume level, so that the fan speed decreases while the oil fume extraction capability of the range hood will not decrease too much. For example, when the air volume level of the range hood is divided into three levels, respectively, high speed level, medium speed level and low speed level, the exhaust volume corresponding to the high speed level is 10m³/min, the exhaust volume corresponding to the medium speed level is 8m³/min, and the exhaust volume corresponding to the low speed level is 6m³/min, when the current air volume level is high speed level, the target air volume level is medium speed level.

S203: adjusting the exhaust air volume of the range hood to an exhaust air volume corresponding to the target air volume level.

The technical effect of this embodiment is that by reducing a range hood from the current air volume level to a target air volume level that is lower by one level, the exhaust air volume of the range hood is reduced, thus reducing the fan noise of the range hood.

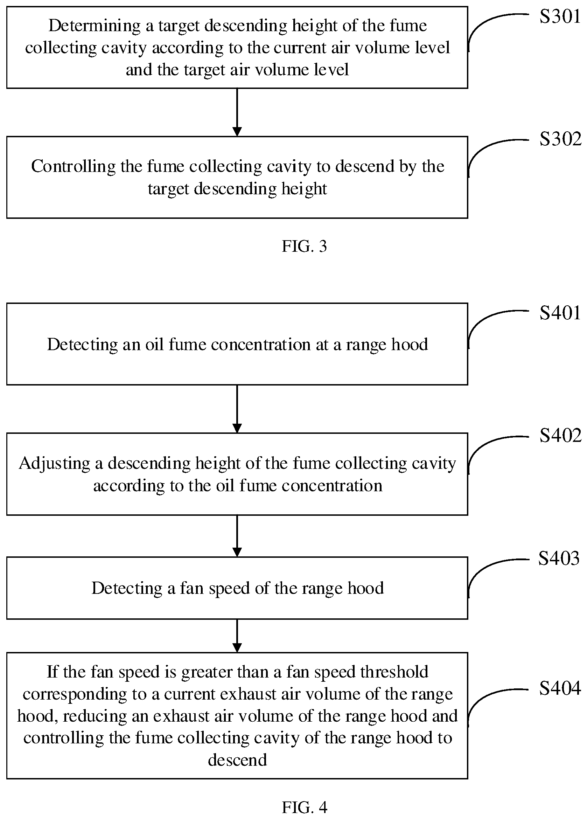

In a possible embodiment of the present application, a method for controlling the descent of a fume collecting cavity of a range hood is provided. FIG. 3 is a schematic flowchart of a method for controlling the descent of a fume collecting cavity of a range hood provided by an embodiment of the present application, as shown in FIG. 3, the method includes the following steps.

S301, determining a target descending height of the fume collecting cavity according to the current air volume level and the target air volume level.

Optionally, according to the exhaust air volume difference between the exhaust air volume corresponding to the current air volume level and the exhaust air volume corresponding to the target air volume level, the target descending height can be calculated. According to the exhaust air volume difference, the degree of reduction of the oil fume extraction capability of the range hood can be determined, thus the target descending height of the fume collecting cavity can be further determined based on the effect of different lowering heights of the fume collecting cavity on the oil fume extraction capability. Further, in a storage module of a control unit the range hood, different target descending heights of the fume collecting cavity corresponding to different exhaust air volume differences can be pre-stored.

Optionally, the difference of exhaust air volume can be used as an input of a PID control algorithm, and an output of the PID control algorithm is the target descending height.

S302, controlling the fume collecting cavity to descend by the target descending height.

The technical effect of this embodiment is that by determining the target descending height of the fume collecting cavity according to the current air volume level and the target air volume level, and controlling the fume collecting cavity to descend by the target descending height, the impact of the reduction of exhaust air volume on the oil fume extraction capability is mitigated.

In a possible embodiment of the present application, another range hood control method is provided, FIG. 4 is a schematic flowchart of another range hood control method provided by an embodiment of the present application, as shown in FIG. 4, the method includes the following steps.

S401, detecting an oil fume concentration at a range hood.

Optionally, a fume sensor can be installed below the range hood, and a control unit controls the fume sensor to detect the oil fume concentration at the range hood.

S402, adjusting a descending height of the fume collecting cavity according to the oil fume concentration.

Optionally, the adjusting the descending height of the fume collecting cavity according to the oil fume concentration includes:
according to the higher the upper concentration limit value of a concentration range in which the oil fume concentration is located, the greater the descending height of the fume collecting cavity.

For example:
when an oil fume concentration ≤ 0.5ppm, the descending height of the fume collecting cavity can be 10cm;
when 0.6ppm < an oil fume concentration ≤ 1.5ppm, the descending height of the fume collecting cavity can be 15cm;
when 1.6ppm < an oil fume concentration ≤ 3.0ppm, the descending height of the fume collecting cavity can be 20cm;
when 3.1ppm < an oil fume concentration, the descending height of the fume collecting cavity can be 25cm.

By descending the fume collecting cavity, the negative pressure area at the air inlet of the fume collecting cavity can be close to the oil fume, thus enhancing the oil fume extraction capability. In this embodiment, the greater the oil fume concentration, the greater the descending height of the fume collecting cavity, and the stronger the oil fume extraction capability of the range hood, so as to better extract the oil fume.

In addition, when a decrease in the oil fume concentration is detected, the fume collecting cavity can be ascended based on the correlation between oil fume concentration and the descending height of the fume collection cavity, thereby improving cooking visibility for users.

S403, detecting a fan speed of the range hood.

S404, if the fan speed is greater than a fan speed threshold corresponding to the current exhaust air volume of the range hood, reducing the exhaust air volume of the range hood and controlling the fume collecting cavity of the range hood to descend.

On the basis of the foregoing embodiments, in a possible embodiment of the present application, a fume collecting plate is arranged at an air inlet of the fume collecting cavity, the method further includes:
adjusting an opening angle of the fume collecting plate according to the descending height of the fume collecting cavity, and the greater the descending height of the fume collecting cavity, the smaller the opening angle of the fume collecting plate.

The fume collecting plate is a flap at the air inlet of the fume collecting cavity of the range hood, which is used to shield the oil fume and reduce the dispersion of the oil fume. Since the oil fume gradually spreads upward from the pots and pans, the closer it is to the oil fume source, the less extraction range is needed, so the smaller the opening angle of the fume collecting plate, and the smaller extraction range can also enhance the extraction power of the range hood and improve the oil fume extraction capability.

The corresponding relationship among the oil fume concentration, the ascending or descending height of the fume collecting cavity and the opening angle of the fume collecting plate can be shown in the following table:

| Oil fume concentration | Fume collecting cavity ascending or descending | Opening angle of fume collecting plate |
|---|---|---|
| ≤0.5ppm | Descending by 10cm | Angle 120° |
| 0.6 to 1.5ppm | Descending by 15cm | Angle 105° |
| 1.6 to 3.0ppm | Descending by 20cm | Angle 90° |
| ≤3.1ppm | Descending by 25cm | Angle 75° |

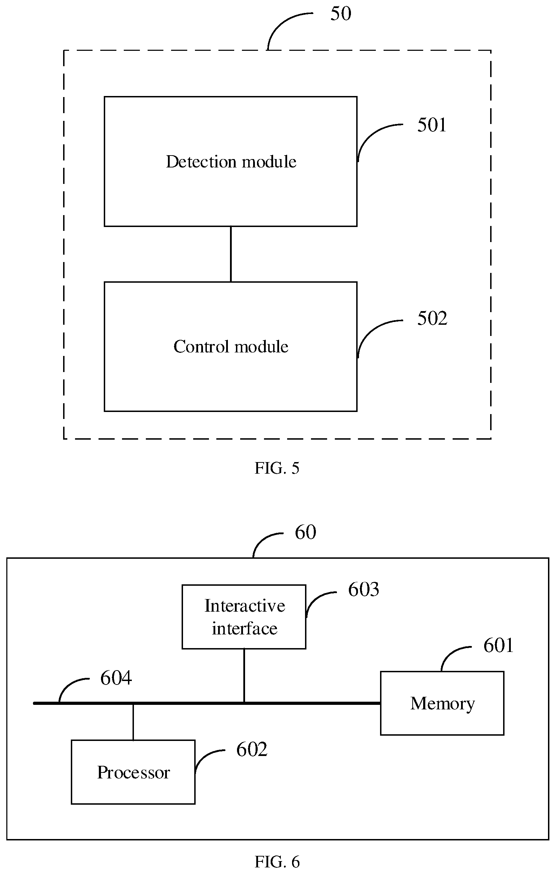

In a possible embodiment of the present application, a range hood control apparatus is provided, FIG. 5 is a schematic diagram of a range hood control apparatus provided by an embodiment of the present application. As shown in FIG. 5, the apparatus 50 includes a detection module 501 and a control module 502;
the detection module 501 is configured to detect a fan speed of the range hood;
the control module 502 is configured to:
   obtain the fan speed of the range hood from the detection module 501, if the fan speed is greater than a fan speed threshold corresponding to a current exhaust air volume of the range hood, reduce an exhaust air volume of the range hood and control the fume collecting cavity of the range hood to descend.

In a possible embodiment of the present application, a range hood control device is provided, and FIG. 6 is a schematic diagram of a range hood control device provided by an embodiment of the present application, as shown in FIG. 6, the device 60 includes:
a memory 601, a processor 602, and an interactive interface 603, the memory 601, the processor 602, and the interactive interface 603 are connected by a bus 604;
the memory 601 is configured to store a computer program;
the processor 602 is configured to execute the computer program stored in the memory 601 to implement the range hood control method described above.

The specific implementation process of the processor 602 can be referred to the method embodiment described above, and the implementation principle and technical effect therebetween are similar, so the details of this embodiment are not repeated here.

In the above embodiment shown in FIG. 6, it should be understood that the processor can be a central processing unit (English: Central Processing Unit, abbreviation: CPU), but may also be other general-purpose processors, digital signal processors (English: Digital Signal Processor, abbreviation: DSP), application specific integrated circuits (English: Application Specific Integrated Circuit, abbreviation: ASIC) and so on. The general-purpose processor may be a microprocessor or the processor may be any conventional processor. The steps of the method disclosed in combination with the invention can be directly embodied in the hardware processor to perform the completion, or with the processor in the hardware and software module combination to perform the completion.

The memory may include random access memory (Random Access Memory, RAM) or may also include non-volatile memory (Non-volatile Memory, NVM), such as at least one disk memory.

The bus can be an industry standard architecture (Industry Standard Architecture, ISA) bus, a peripheral component (Peripheral Component, PCI) bus or an extended industry standard architecture (Extended Industry Standard Architecture, EISA) bus, and so on. The bus can be divided into address bus, data bus and control bus. For convenience of representation, the bus in the drawings of the present application is not limited to only one bus or type of bus.

In one possible embodiment of the application, a readable storage medium is provided, where the readable storage medium stores a computer program; the computer program is used for implementing the range hood control method described above.

Embodiments of the present application also provide a computer program product, the computer program product includes instructions, when executed, enable the computer to perform the technical solution in any of the foregoing method embodiments.

The computer readable storage media and the readable storage media described above may be implemented by any type of volatile or non-volatile storage device or a combination thereof, such as static random access memory (SRAM), electrically erasable programmable read-only memory (EEPROM), erasable programmable read-only memory (EPROM), programmable read-only memory (PROM), read-only memory (ROM), magnetic memory, flash memory, disk or CD-ROM. A readable storage medium may be any available medium that can be accessed by a general-purpose or specialized computer.

An exemplary readable storage medium is coupled to the processor such that the processor is capable of reading information from the readable storage medium and may write information to the readable storage medium. Of course, the readable storage medium may also be an integral part of the processor. The processor and the readable storage medium may be located in application specific integrated circuits (Application Specific Integrated Circuits, abbreviation: ASIC). Of course, the processor and the readable storage medium may also be present in the device as discrete components.

The division of the units as described is only a logical functional division, and the actual implementation can be divided in another way, for example, multiple units or components can be combined or can be integrated into another system, or some features can be ignored, or not implemented. As another point, the coupling or direct coupling or communication connection between each other shown or discussed may be indirect coupling or communication connection through some interface, device or unit, which may be electrical, mechanical or other forms.

The units described as separate components may or may not be physically separated, and the components displayed as units may or may not be physical units, that is, they may be located in one place or distributed to multiple network units. Some or all of the units can be selected according to actual needs to achieve the purpose of this embodiment.

In addition, each functional unit in each embodiment of the present invention can be integrated into one processing unit, or each unit can exist physically alone, or two or more units can be integrated into one unit.

The functions described above can be stored in a computer-readable storage medium if they are implemented in the form of software functional units and sold or used as independent products. Based on this understanding, the technical solution of the present invention can be embodied in the form of a software product, which is stored in a storage medium and includes several instructions to make a computer device (which can be a personal computer, a server, a network device, etc.) execute all or part of the steps of the method described in various embodiments of the present invention. The aforementioned storage media include: U disk, mobile hard disk, Read-Only Memory (ROM), Random Access Memory (RAM), magnetic disk or optical disk and other media that can store program codes.

A person of ordinary skill in the art can understand that implementing all or part of the processes in the methods of the aforementioned embodiments may be accomplished by instructing related hardware by means of a computer program, the computer program may be stored in a non-volatile computer readable storage medium, and when being executed, the computer program may include the processes of the aforementioned method embodiments; The aforementioned storage media include ROM, RAM, magnetic disk or optical disk and other media that can store program codes.

So far, the technical scheme of the application has been described in combination with the preferred embodiments shown in the drawings, but it is easy for those skilled in the art to understand that the protection scope of this application is obviously not limited to these specific embodiments, and the above embodiments are only used to illustrate the technical scheme of this application, but not to limit it; Although the present application has been described in detail with reference to the foregoing embodiments, it should be understood by those skilled in the art that the technical scheme described in the foregoing embodiments can still be modified, or some or all of its technical features can be replaced by equivalents; However, these modifications or substitutions do not make the essence of the corresponding technical solutions deviate from the scope of the technical solutions of various embodiments of this application.

## Claims

1. A range hood control method, applied to a range hood with a liftable fume collecting cavity, wherein the method comprises:
detecting a fan speed of the range hood; and
if the fan speed is greater than a fan speed threshold corresponding to a current exhaust air volume of the range hood, reducing an exhaust air volume of the range hood and controlling the fume collecting cavity of the range hood to descend.

2. The method according to claim 1, wherein the reducing the exhaust air volume of the range hood comprises:
obtaining a current air volume level of the range hood;
determining a target air volume level according to the current air volume level; and
adjusting the exhaust air volume of the range hood to an exhaust air volume corresponding to the target air volume level.

3. The method according to claim 2, wherein the determining the target air volume level according to the current air volume level comprises:
determining an air volume level that is one level lower than the current air volume level as the target air volume level.

4. The method according to claim 2, wherein the controlling the fume collecting cavity of the range hood to descend comprises:
determining a target descending height of the fume collecting cavity according to the current air volume level and the target air volume level; and
controlling the fume collecting cavity to descend by the target descending height.

5. The method according to claim 1, wherein before the detecting the fan speed of the range hood, the method further comprises:
detecting an oil fume concentration at the range hood; and
adjusting a descending height of the fume collecting cavity according to the oil fume concentration.

6. The method according to claim 5, wherein the adjusting the descending height of the fume collecting cavity according to the oil fume concentration comprises:
according to the higher an upper concentration limit value of a concentration range in which the oil fume concentration is located, the greater the descending height of the fume collecting cavity.

7. The method according to any one of claims 1-6, wherein a fume collecting plate is arranged at an air inlet of the fume collecting cavity, and the method further comprises:
adjusting an opening angle of the fume collecting plate according to the descending height of the fume collecting cavity, and the greater the descending height of the fume collecting cavity, the smaller the opening angle of the fume collecting plate.

8. A range hood control apparatus, wherein the apparatus comprises:
a detection module, configured to detect a fan speed of the range hood; and
a control module, configured to:
obtain the fan speed of the range hood from the detection module, if the fan speed is greater than a fan speed threshold corresponding to a current exhaust air volume of the range hood, reduce an exhaust air volume of the range hood and control a fume collecting cavity of the range hood to descend.

9. A range hood control device, wherein the device comprises:
a memory and a processor;
the memory is configured to store a computer program;
the processor is configured to execute the computer program stored in the memory to implement the range hood control method according to any one of claims 1 to 7.

10. A computer readable storage medium, wherein the computer readable storage medium storing a computer program; the computer programs is used for implementing the range hood control method according to any one of claims 1-7.
